# EUROPEAN PATENT APPLICATION

(11) **EP 4 642 130 A2**
(43) Date of publication of application: **29.10.2025**
(21) Application number: 25166520.4
(22) Date of filing: 27.03.2025
(51) Int. Cl.: H04W 72/115, H04W 56/00, H04W 36/00

(54) **CONFIGURATION AND USAGE OF PRE-CONFIGURED UPLINK RESOURCES**

(30) Priority: 24.04.2024 WO PCT/CN2024/089616
(71) Applicant: Apple Inc., Cupertino, CA 95014 (US)
(72) Inventor: CHEN, Yuqin, Beijing, 100022 (CN); HU, Haijing, Cupertino, 95014 (US); XU, Fangli, Beijing, 100022 (CN)
(74) Representative: Zacco Denmark A/S

(57) **Abstract**

The present application relates to configuration and usage of pre-configured uplink resources (PURs). A UE can store configuration information indicating a PUR configuration valid for more than two cells and/or more than two base stations. Upon a network coverage change from one of such cells to another one of such cells and/or from one of such base stations to another one of such base stations, the UE can determine that the PUR configuration is still valid. The UE can use a PUR configured according to the PUR configuration resource to send a small amount of data, such as an in a Message 3, without the need to send a RACH preamble (e.g., a Message 1) or receiving a RAR (e.g., a Message 2). The UE can also receive an indication (e.g., a Message 4) that the data was successfully received.

## Description

### CROSS-REFERENCE TO RELATED APPLICATIONS

This application claims the benefit of and priority to PCT International Application No. PCT/CN2024/089616, filed on April 24, 2024, which is incorporated by reference herein in its entirety for all purposes.

### BACKGROUND

Cellular communications can be defined in various standards to enable communications between a user equipment and a cellular network. For example, Fifth generation mobile network (5G) is a wireless standard that aims to improve upon data transmission speed, reliability, availability, and more. Cellular coverage is a relevant feature for data transmission. In particular, when a user equipment (UE) is within a cell coverage, the UE may be able to exchange data with the cellular network. Otherwise, the UE may not be able to do so.

### BRIEF DESCRIPTION OF THE DRAWINGS

FIG. 1 illustrates an example of a network environment, in accordance with some embodiments.
FIG. 2 illustrates an example of access to a network based on cell coverage, in accordance with some embodiments.
FIG. 3 illustrates an example of a mobile-originated early data transmission (MO-EDT) procedure for a control plane, in accordance with some embodiments.
FIG. 4 illustrates another example of an MO-EDT for a control plane, in accordance with some embodiments.
FIG. 5 illustrates an example of an MO-EDT for a user plane, in accordance with some embodiments.
FIG. 6 illustrates another example of an MO-EDT for a user plane, in accordance with some embodiments.
FIG. 7 illustrates an example of a mobile terminated early data transmission (MT-EDT) procedure, in accordance with some embodiments.
FIG. 8 illustrates an example of a pre-configured uplink resource (PUR) configuration procedure, in accordance with some embodiments.
FIG. 9 illustrates an example of a PUR transmission procedure for a user plane, in accordance with some embodiments.
FIG. 10 illustrates an example of a PUR transmission procedure for a control plane, in accordance with some embodiments.
FIG. 11 illustrates another example of a PUR transmission procedure for a user plane, in accordance with some embodiments.
FIG. 12 illustrates an example of a PUR configuration procedure for multiple cells and/or base stations, in accordance with some embodiments.
FIG. 13 illustrates an example of an operational flow/algorithmic structure implemented by a user equipment (UE) as part of a PUR configuration and transmission procedure for multiple cells and/or base stations, in accordance with some embodiments.
FIG. 14 illustrates examples of media access control (MAC) control element (CEs) to acknowledge data transmission, in accordance with some embodiments.
FIG. 15 illustrates an example of an operational flow/algorithmic structure implemented by a UE for receiving a MAC CE acknowledging data transmission, in accordance with some embodiments.
FIG. 16 illustrates an example of an operational flow/algorithmic structure implemented by a UE as part for uplink transmissions using PURs, in accordance with some embodiments.
FIG. 17 illustrates an example of an operational flow/algorithmic structure implemented by a network as part for uplink transmissions using PURs, in accordance with some embodiments.
FIG. 18 illustrates an example of receive components, in accordance with some embodiments.
FIG. 19 illustrates an example of a UE, in accordance with some embodiments.
FIG. 20 illustrates an example of a base station, in accordance with some embodiments.

### DETAILED DESCRIPTION

Generally, a device communicates with a network when the device is in network coverage. The device can be configured with pre-configured uplink resources (PURs) usable for transmitting data to the network. The PUR configuration can be valid for more than one cell or more than one base station of the network. In this way, when the network coverage changes from a first cell to a second cell or from a first base station to a second base station, the PUR configuration may be re-used without the need to re-configure the device. In particular, upon the network coverage change from the first cell or the first base station, the UE can determine whether the PUR configuration is still valid for the second cell or the second base station. If so, the UE can check other validity conditions (e.g., a time alignment timer (TAT) has not expired) and/or usage trigger conditions (e.g., related to the distance between the device and a base station or the device and a cell reference location, or related to a propagation delay). Assuming that the conditions are met, the UE can use one or more of the PURs for an uplink transmission of data. This transmission can be for a Message 3 (Msg3) that includes the data and that is sent without sending a prior random access preamble Message 1 (Msg1) or receiving a random access response Message 2 (Msg2). The PUR resource(s) can be configured for multiple devices for a contention-based use of resources. In such situations, the device can also receive signaling back indicating that the transmitted data was successfully received. The signaling can include a media access control (MAC) control element (CE) corresponding to a Message 4 (Msg4) and indicating an identifier of the device (or other information associated with the device and included in the Msg 3).

Such features provide many technical advantages. For example, the use of PURs can persist despite the change to the network coverage and without the need to re-configure the device, thereby reducing the overhead. Further, an efficient delivery of information indicating that the uplink data transmission was successful in a contention-based use of PURs is possible, thereby also reducing the overhead.

The network coverage can change for different reasons. In an example, the network coverage can be provided via a base station of the network and can be referred to as cell coverage. In particular, the base station can provide a serving cell to which the device connects. In certain situations, the base station may be physically movable relative to the device. For example, the base station can be implemented in a communications satellite. In other situations, the device may be physically movable relative to the base station (e.g., when the device is a mobile device traveling on a surface). Of course, there can be situations where both the device and the base station are movable relative to each other. Given the mobility, the cell coverage of the base station can change over time. When the cell coverage is no longer available to the device via the existing serving cell (e.g., because of an orbital location of a communications satellite and/or a geographical location of the device), the device may no longer be able to communicate with the network via this cell. Instead, the device may use another cell (which becomes the new serving cell and can be from the same or a different base station) to obtain cell coverage. In such situations, the PUR configuration can be re-used across the cells and/or base stations (or satellites) as long as the PUR configuration is valid and configured conditions are satisfied.

In the interest of clarity of explanation, various embodiments of the present disclosure are described in connection with a non-terrestrial network (NTN). The NTN can involve communications via a network node that is remote from the surface of Earth. An example of the network node can be a base station implemented on a communications satellite. Nonetheless, the embodiments are not limited as such and similarly apply to other types of network nodes (e.g., a base station on an airplane with an air-to-ground communications link) and/or other types of networks (e.g., including a terrestrial network, including but not limited to, a network that supports a high speed train (HST) communications mode).

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art, having the benefit of the present disclosure, that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B).

The following is a glossary of terms that may be used in this disclosure.

The term "circuitry" as used herein refers to, is part of, or includes hardware components, such as an electronic circuit, a logic circuit, a processor (shared, dedicated, or group) or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, a programmable system-on-a-chip (SoC)), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer to an application processor, baseband processor, a central processing unit (CPU), a graphics processing unit, a single-core processor, a dual-core processor, a triple-core processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, or the like.

The term "device" as used herein refers to a device with radio communication capabilities, one or more processors, and one or more memory. The device may be configured as a UE that supports one or more configurations.

The term "user equipment" or "UE" as used herein refers to a device with radio communication capabilities and may describe a remote user of network resources in a communications network. The term "user equipment" or "UE" may be considered synonymous to, and may be referred to as, client, device, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface. The UE may have a primary function of communication with another UE or a network and the UE may be integrated with other devices and/or systems (e.g., in a vehicle).

The term "base station" as used herein refers to a device with radio communication capabilities, that is a device of a communications network (or, more briefly, network), and that may be configured as an access node in the communications network. A UE's access to the communications network may be managed at least in part by the base station, whereby the UE connects with the base station to access the communications network. Depending on the radio access technology (RAT), the base station can be referred to as a gNodeB (gNB), eNodeB (eNB), access point, repeater on a communications satellite, etc.

The term "computer system" as used herein refers to any type of interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component within a computing environment, or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, or the like. A "hardware resource" may refer to compute, storage, or network resources provided by physical hardware element(s). A "virtualized resource" may refer to compute, storage, or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refer to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, virtualized network function, or the like.

The term "information element" refers to a structural element containing one or more fields. The term "field" refers to individual contents of an information element, or a data element that contains content. An information element may include one or more additional information elements.

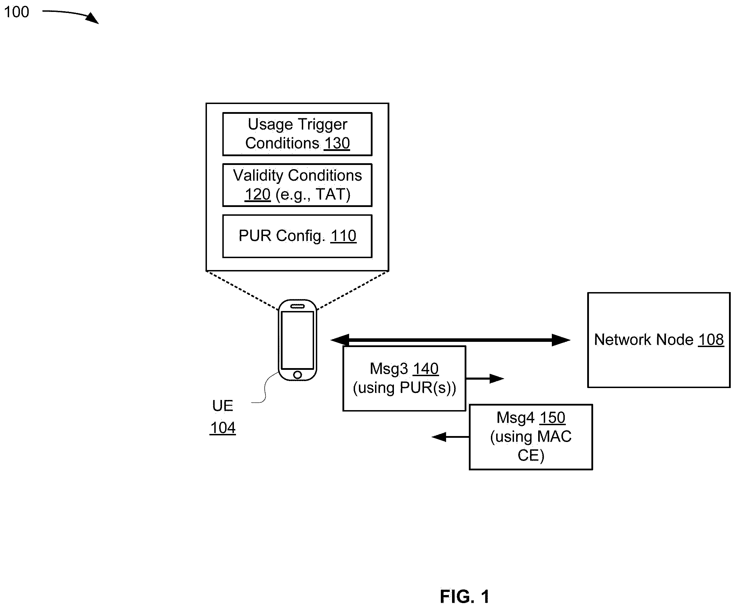

FIG. 1 illustrates a network environment 100, in accordance with some embodiments. The network environment 100 may include a UE 104 and a network node 108. The network node 108 may be a base station (or a set of transmission and reception points (TRPs) thereof) that provides a wireless access cell; for example, a Third-Generation Partnership Project (3GPP) New Radio (NR) cell, through which the UE 104 may communicate with the network node 108. This base station may be a component of a terrestrial network, a component of a non-terrestrial network, or components distributed between a terrestrial network and a non-terrestrial network. The UE 104 and the network node 108 may communicate over an interface compatible with 3GPP technical specifications, such as those that define Fifth-Generation (5G) NR system standards.

The network node 108 may transmit information (for example, data and control signaling) in the downlink direction by mapping logical channels on the transport channels, then transport channels onto physical channels. The logical channels may transfer data between a radio link control (RLC) and media access control (MAC) layers; the transport channels may transfer data between the MAC and PHY layers; and the physical channels may transfer information across the air interface. The physical channels may include a physical broadcast channel (PBCH); a physical downlink control channel (PDCCH); and a physical downlink shared channel (PDSCH).

The PBCH may be used to broadcast system information that the UE 104 may use for initial access to a serving cell. The PBCH may be transmitted along with physical synchronization signals (PSS) and secondary synchronization signals (SSS) in a synchronization signal (SS)/PBCH block. The SS/PBCH blocks (SSBs) may be used by the UE 104 during a cell search procedure and for beam selection.

The PDSCH may be used to transfer end-user application data, signaling radio bearer (SRB) messages, system information messages (other than, for example, MIB), and paging messages.

The PDCCH may transfer downlink control information (DCI) that is used by a scheduler of the network node 108 to allocate both uplink and downlink resources. The DCI may also be used to provide uplink power control commands, configure a slot format, or indicate that preemption has occurred.

The network node 108 may also transmit various reference signals to the UE 104. The reference signals may include demodulation reference signals (DMRSs) for the PBCH, PDCCH, and PDSCH. The UE 104 may compare a received version of the DMRS with a known DMRS sequence that was transmitted to estimate an impact of the propagation channel. The UE 104 may then apply an inverse of the propagation channel during a demodulation process of a corresponding physical channel transmission.

The reference signals may also include CSI-RS. The CSI-RS may be a multipurpose downlink transmission that may be used for CSI reporting, beam management, connected mode mobility, radio link failure detection, beam failure detection and recovery, and fine-tuning of time and frequency synchronization.

The reference signals and information from the physical channels may be mapped to resources of a resource grid. There is one resource grid for a given antenna port, subcarrier spacing configuration, and transmission direction (for example, downlink or uplink). The basic unit of an NR downlink resource grid may be a resource element, which may be defined by one subcarrier in the frequency domain, and one orthogonal frequency division multiplexing (OFDM) symbol in the time domain. Twelve consecutive subcarriers in the frequency domain may compose a physical resource block (PRB). A resource element group (REG) may include one PRB in the frequency domain, and one OFDM symbol in the time domain, for example, twelve resource elements. A control channel element (CCE) may represent a group of resources used to transmit PDCCH. One CCE may be mapped to a number of REGs; for example, six REGs.

Transmissions that use different antenna ports may experience different radio channels. However, in some situations, different antenna ports may share common radio channel characteristics. For example, different antenna ports may have similar Doppler shifts, Doppler spreads, average delay, delay spread, or spatial receive parameters (for example, properties associated with a downlink received signal angle of arrival at a UE). Antenna ports that share one or more of these large-scale radio channel characteristics may be said to be quasi co-located (QCL) with one another. 3GPP has specified four types of QCL to indicate which particular channel characteristics are shared. In QCL Type A, antenna ports share Doppler shift, Doppler spread, average delay, and delay spread. In QCL Type B, antenna ports share Doppler shift and Doppler spread. In QCL Type C, antenna ports share Doppler shift and average delay. In QCL Type D, antenna ports share spatial receiver parameters.

The network node 108 may provide transmission configuration indicator (TCI) state information to the UE 104 to indicate QCL relationships between antenna ports used for reference signals (for example, synchronization signal/PBCH or CSI-RS) and downlink data or control signaling (for example, PDSCH or PDCCH). The network node 108 may use a combination of RRC signaling, MAC control element signaling, and DCI, to inform the UE 104 of these QCL relationships.

The UE 104 may transmit data and control information to the network node 108 using physical uplink channels. Different types of physical uplink channels are possible, including a physical uplink control channel (PUCCH) and a physical uplink shared channel (PUSCH). Whereas the PUCCH carries control information from the UE 104 to the network node 108, such as uplink control information (UCI), the PUSCH carries data traffic (e.g., end-user application data) and can carry UCI.

In an example, communications with the network node 108 and/or the base station can use channels in the frequency range 1 (FR1) band and/or frequency range 2 (FR2) band, although other frequency ranges are possible. The FR1 band includes a licensed band and an unlicensed band. The NR unlicensed band (NR-U) includes a frequency spectrum that is shared with other types of radio access technologies (RATs) (e.g., LTE-LAA, WiFi, etc.). A listen-before-talk (LBT) procedure can be used to avoid or minimize collision between the different RATs in the NR-U, whereby a device applies a clear channel assessment (CCA) check before using the channel.

The UE 104 can be located within a network coverage. In particular, the network node 108 may provide the network coverage with signaling (e.g., which may be carried by one or more beams). The network coverage may represent a cell or a portion of the cell that the network node 108 provides. The network coverage may provide network connections to multiple UEs, similar to the UE 104. These UEs may communicate with the network node 108 on both the uplink and the downlink based on channels available to them when the UEs are in the network coverage.

In an example, the UE 104 supports carrier aggregation (CA), whereby the UE 104 can connect and exchange data simultaneously over multiple component carriers (CCs) with the network node 108. The CCs can belong to the same frequency band, in which case they are referred to as intra-band CCs. Intra-band CCs can be contiguous or non-contiguous. The CCs can also belong to different frequency bands, in which case they are referred to as inter-band CCs. A serving cell can be configured for the UE 104 to use a CC. A serving cell can be a primary (PCell), a primary secondary cell (PSCell), or a secondary cell (SCell). Multiple SCells can be activated via an SCell activation procedures where the component carriers of these serving cells can be intra-band contiguous, intra-band noon-contiguous, or inter-band. The serving cells can be collocated or non-collocated.

The UE 104 can also support dual connectivity (DC), where it can simultaneously transmit and receive data on multiple CCs from two serving nodes or cell groups (a master node (MN) and a secondary node (SN)). DC capability can be used with two serving nodes operating in the same RAT or in different RATs (e.g., an MN operating in NR, while an SN operates in LTE). These different DC modes include, for instance, evolved-universal terrestrial radio access-new radio (EN)-DC, NR-DC, and NE-DC (the MN is a NR gNB and the SN is an LTE eNB).

As further described in the next figures, the UE 104 can store configuration information for a PUR configuration 110. The PUR configuration 110 can be valid for more than two cells and/or more than two network nodes (or base stations). For example, while the UE 104 is using a first serving cell provided by the network node 108, PURs can be configured for the UE 104 by the network node 108. These PURs be resources of the first serving cell. The configuration information can indicate that the PUR configuration 110 is also applicable to a second cell. This second cell can be provided by the same network node 108 or a different network node (e.g., another base station). As such, when the second cell becomes the new serving cell, the UE 104 need not be re-configured with PURs. Instead, the PUR configuration 110 still applies such that the UE can use PURs of the second cell for uplink data transmission. In another example, it is possible that the serving cell does not change. Instead, the network node can change. In other words, at one point time, the UE 104 is connected with the network node 108. At another point in time, the UE 104 is connected with a second network node. These two network nodes may provide the same logical serving cell. Particularly, multiple satellites may be supported by the same/different cells as NTN supports physical cell identifier (PCI) unchanged satellite switch, where one logical cell connects to multiple satellites to cover the same geographical area at different time points. In this example, the configuration information can indicate that the PUR configuration 110 is also applicable to the second network node such that the UE 104 need not be reconfigured for PURs when it communicates with the second network node.

In addition, the UE 104 can maintain validity conditions 120 and usage trigger conditions 130. Upon a network change (e.g., from the serving cell to the second cell and/or from the network node 108 to the second network node), the UE 104 can determine that the PUR configuration 100 is valid. The UE 104 can additionally check the validity conditions 120 to determine that it can use one or more of the configured PURs. An example validity condition can relate to uplink timing. Particularly, the UE 104 can maintain a time alignment timer (TAT). If the TAT has not expired (e.g., has a valid timing alignment value), the UE 104 can determine that the configured PUR(s) is(are) usable. The UE 104 can also check the usage trigger conditions 130. A usage trigger condition can indicate that configured PUR(s) is(are) usable for an uplink data transmission if this condition is met. Examples of the usage trigger conditions 130 include distance-based conditions and propagation delay-based conditions are further described herein below.

Thereafter, the UE 104 can use PUR(s) for the uplink data transmission. The uplink data transmission can correspond to a Msg3 140 that includes data. This uplink transmission can be sent to the network node 108 (or the second network node as the case may be) using the second cell (or the logical serving cell as the case may be). In response, the network node 108 (or the second network node as the case may be) can send an indication that the data was successfully received. This indication can take the form of a Msg4 150 carried in a MAC CE.

In an example, the configured PURs are shared among multiple UEs. As such, the PUR usage corresponds to a contention-based usage of resources. In this example, the Msg 4 150 can include information about the UE 104 to indicate the successful reception of the data in a contention-based PUR usage.

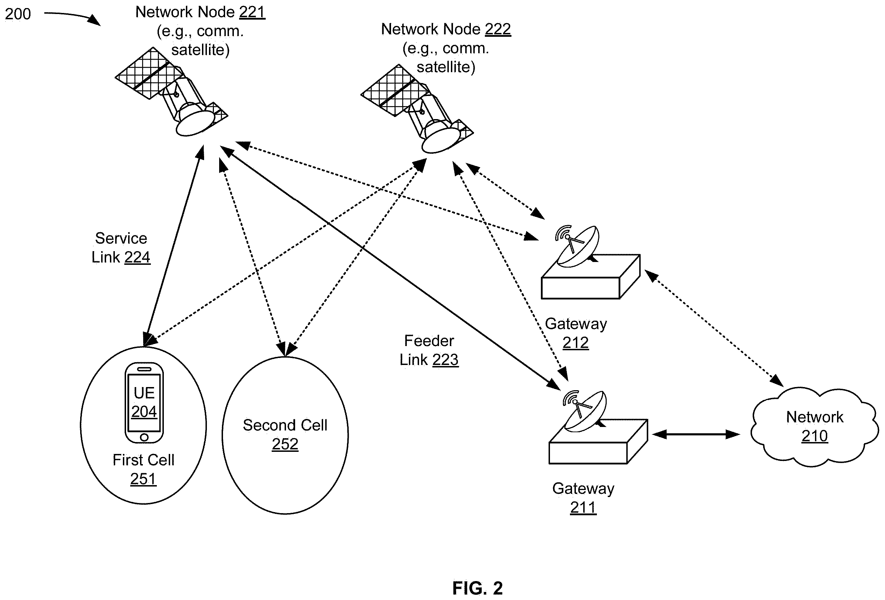

FIG. 2 illustrates an example of access 200 to a network 210 based on a cell coverage, in accordance with some embodiments. The network 210 can be accessible to UEs via a network node 221 that provides cell coverage. Generally, a cell coverage corresponds to a geographical area within which the access to the network 210 via a transmission and reception point (TRP) is available.

In an example, the network 210 can implement a particular set of radio access technologies (RATs) such as, but not limited to, 5G and/or different generation of a 3GPP network. The network 210 can also be a terrestrial network, in which case the network node 221 can be a component of a terrestrial access node, such as gNB or an eNB (or more generally a terrestrial base station). In another example, the network 210 can be, at least in part, a non-terrestrial network (NTN), where the network node 221 may be implemented on a communications satellite. In this case, the network node 221 may be referred to as a non-terrestrial network node, may be implemented as a repeater, and may use a feeder link 223 to be connected with a terrestrial access node (e.g., a terrestrial base station) of the network 210 via a gateway 222. Of course, the network 210 can be a hybrid network that includes both non- terrestrial components and terrestrial components.

Generally, the network node 221 can provide the cell coverage by providing a number of cells. A UE 204 can be located in the cell coverage by using at least one of the cells. In the illustration of FIG. 2, the UE 204 uses a first cell provided by the network node 221, whereby the first cell 251 enables a service link 224 to the network node 221.

In the interest of clarity of explanation, various embodiments are described hereinafter in connection with a communications satellite as an example of the network node 221. However, the embodiments are not limited as such and similarly apply to any other network node that belongs to a network in which beam coverage changes over time.

Generally, NTNs refer to networks, or segments of networks, using, for example, a spaceborne vehicle or an airborne vehicle for transmission. Spaceborne vehicles can include low earth orbit satellites, medium earth orbit satellites, geostationary satellites, and/or highly elliptical orbit satellites. Airborne vehicles can include high altitude platform vehicles (HAPs). NTNs can address mobile broadband needs and public safety needs in unserved/underserved areas. NTNs can also address maritime, airplane connectivity, and/or railway needs.

NR NTN (e.g., in the cases of low earth orbit and medium earth orbit) can support HAPs and air-to-ground (ATG) scenarios. Frequency division duplex (FDD) can be supported, although time division duplex (TDD) may also be supported (e.g., TDD may be applied for relevant scenarios e.g., HAPS, ATG). Earth can be sectioned in fixed tracking areas. UEs can be equipped with global navigation satellite system (GNSS) capabilities. Data can be communicated assuming a transparent payload. Handheld devices in FR1 (e.g., "power class 3") and very small aperture terminal (VSAT) devices with external antenna at least in FR2 can support NR NTN connectivity.

In the illustration of FIG. 2, the network node 221, the first cell 251, and the gateway 211 are a first network node, a first cell, and a first gateway of the network 210. Variations exist and the related communications links are shown with dotted arrows. As shown, A second network node 222, a second cell 252, and a second gateway 212 of the network 210 can also be used.

In one example, the second cell 252 is provided by first the network node 221 (as part of the cell coverage of the network node 221). In this case, the first cell 251 can be a serving cell for the UE 204. An intra-satellite handover can occur whereby the second cell 252 becomes the serving cell for the UE 204. The intra-satellite handover can be with the same feeder link 223 (e.g., to the same gateway 211 and the same base station (not shown) of the network 210). Alternatively, the intra-satellite handover can be with a different feeder link, such as with a feeder link between the first network node 221 and the second gateway 212 (and a different base station (not shown)) of the network 210.

In another example, the second cell 252 is provided by the second network node 222. In this case, the first cell 251 can be a serving cell for the UE 204. An inter-satellite handover can occur whereby the second cell 252 becomes the serving cell for the UE 204. The inter-satellite handover can involve the same gateway 211 and the same base station (not shown) of the network 210. Alternatively, the inter-satellite handover can involve the second gateway 212 (and a different base station (not shown)) of the network 210.

In the above examples of intra and inter-satellite handovers and in other examples (e.g., the handover to a new serving cell, or the use of a PSCell or SCell along with a PCell), a PUR configuration can be defined for the UE 204 such that the UE can use the same PUR configuration for PURs of the different cells (e.g., the first cell 251 and the second cell 252) and/or different network nodes (e.g., the first network node 221 and the second network node 222). Before further describing such configuration and usage, herein next is a description of early data transmission and PURs.

In an example, the UE 204 is a narrowband-internet of thigs (NB-IoT) device. In this case, at least a portion of the network can be an NB-IoT NTN deployed to support communications of NB-IoT devices.

Different techniques exist for a UE (e.g., a IoT device or an NB-IoT device) to send small amounts of data to the network without having to enter an RRC connected state. An early data transmission (EDT) procedure is an example of such techniques. The signaling diagram may represent a procedure that is performed in the control plane or the user plane.

In an example of the EDT procedure, a UE (e.g., the UE 204) may send a Msg1 that includes a random access preamble to the network (e.g., a base station, such as the network node 221). In response to the Msg1, the base station may send a random access response (RAR), such as a Msg2, that includes resources for the UE to perform a random access channel (RACH) procedure with the network.

Using the resources allocated by the network in the RAR, the UE may send a Msg3 that may be different than a normal Msg3 that the UE may send when performing the RACH procedure to transition to a connected state (e.g., RRC_Connected) with the network. The Msg3 may contain the small amount of data that the UE wants to send to the network. When the Msg3 is sent on the control plane, the Msg3 may be termed a RRCEarlyDataRequest and when the MSg3 is sent on the user plane the Msg3 may be termed a RRCConnectionResumeRequest. Throughout this description, the term Msg3 may refer to either of these types of messages.

The base station receives the Msg3 from the UE and determines that the UE does not want to transition to the connected state but merely used the Msg3to send the data to the network. Assuming the network received the data correctly, the base station sends back a Msg4. When the Msg4 is sent on the control plane, the Msg4 may be termed a RRCEarlyDataComplete and when the MSg4 is sent on the user plane the Msg4 may be termed a RRCConnectionRelease. Throughout this description, the term Msg4 may refer to either of these types of messages. The receipt of the Msg4 indicates to the UE that the network received the small amount of data, and the UE may then return to the idle state (e.g., RRC_Idle) and not enter the connected state because the data the UE had to send to the network has been sent in the Msg3.

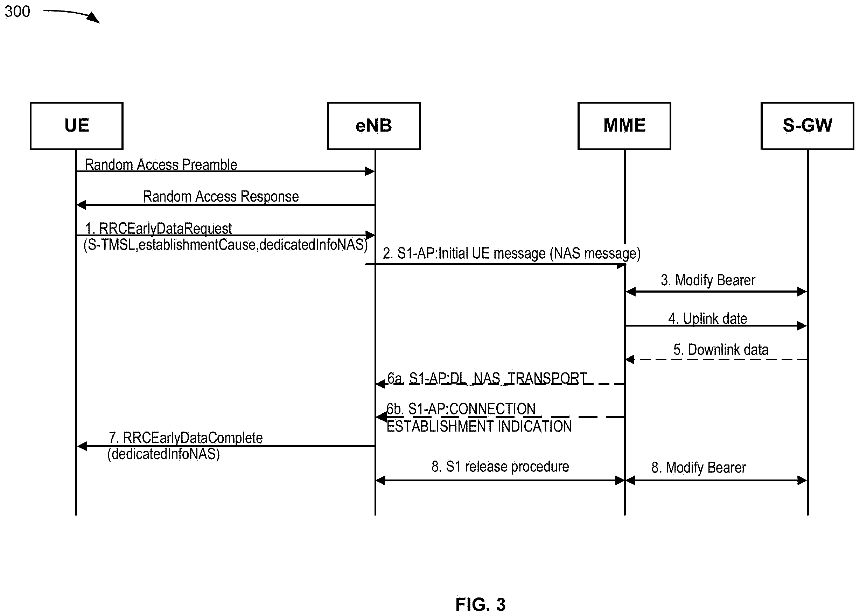

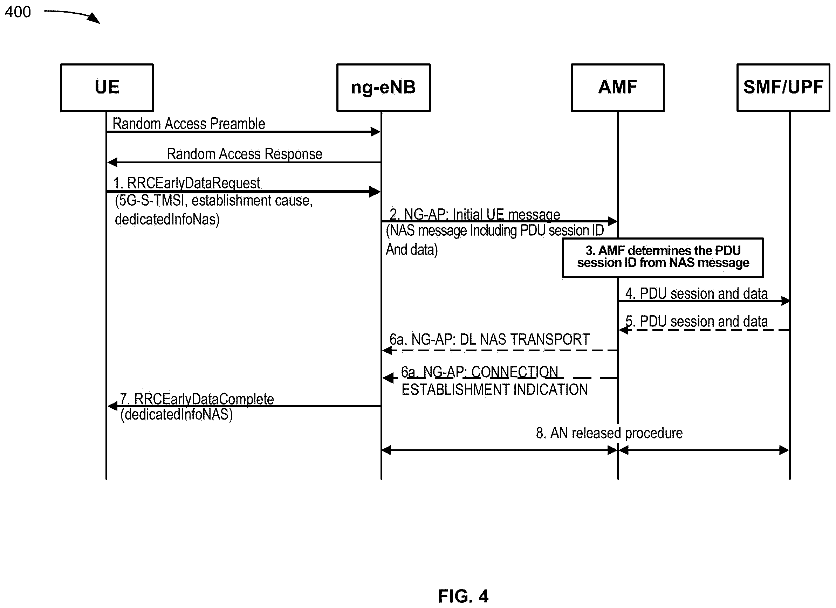

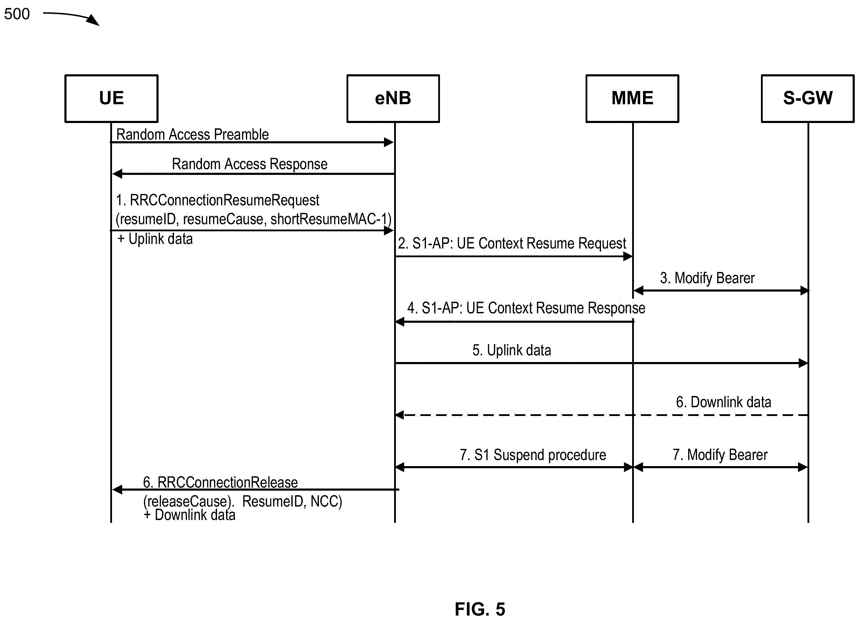

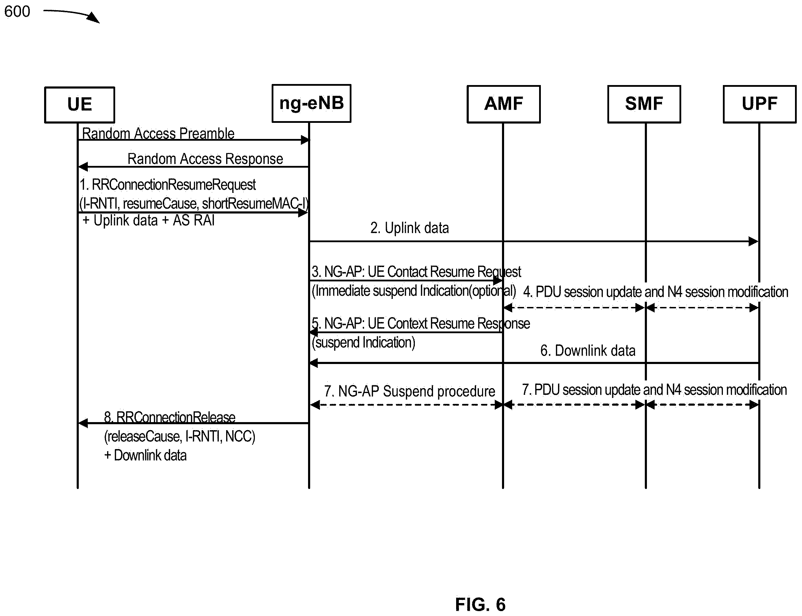

FIGS. 3-7 illustrate examples of an EDT procedure according to various example embodiments. Particularly, FIG. 3 illustrates an example 300 of a mobile-originated early data transmission (MO-EDT) procedure for a control plane, in accordance with some embodiments. FIG. 4 illustrates another example 400 of an MO-EDT for a control plane, in accordance with some embodiments. FIG. 5 illustrates an example 500 of an MO-EDT for a user plane, in accordance with some embodiments. FIG. 6 illustrates another example 600 of an MO-EDT for a user plane, in accordance with some embodiments. In the case of MO-EDT, the UE is able to send the EDT as part of the initial request to the base station (e.g., RRCEarlyDataRequest for control plane (CP) or user plane (UP)), while receiving a data complete indication as part of the CP procedure (e.g., RRCEarlyDataComlete or RRCConnectionRelease).

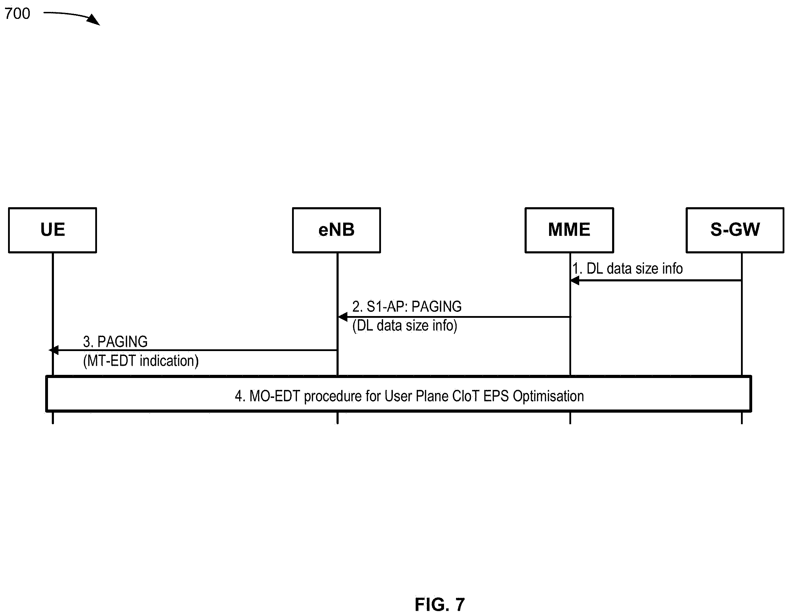

FIG. 7 illustrates an example 700 of a mobile terminated early data transmission (MT-EDT) procedure, in accordance with some embodiments. Referring to FIG. 7, the network triggers the EDT procedure with the use of paging that originates from the Mobility Management Entity (MME) and proceeds through the UE that starts the MO-EDT procedure for the user plane. As with the legacy MO-EDT Procedure, the UE is capable of sending the data with its initial transmission in the process.

While the above EDT procedures may save some signaling overhead for the network, improvements can be made to further reduce the signaling overhead, resulting in an enhanced EDT procedure. For example, the Msg1 and RAR may be eliminated, and the enhanced EDT procedure may start with the Msg3. However, there may be several challenges with starting with Msg3. For example, as described above, the RAR may allocate resources to the UE to send the Msg3. Without this allocation of resources, the UE may not be capable of determining of what resources should be used to send the Msg3 and the network may not be capable of determining of what resources are used for Msg3.

In the enhanced EDT procedure, a UE may receive a system information block (SIB) transmitted by a base station. The SIB may define the common Msg3/Msg4 resources that may be used by the UE. When the UE has a small amount of data to send to the network, the UE may select a common Msg3 resource to send the Msg3 with the small amount of data. This Msg3 can be sent as part of an RRC early data request (EECEarlyDataRequest). The base station can then respond with and the UE can receive a Msg4 indicating the UL transmission of the small amount of data in the Msg3 is successful. The Msg4 may also include a small amount of data that may be sent by the network to the UE.

The common resources indicated in the SIB may be shared by multiple UEs (in a contention-based approach, where Msg4 for be used to indicate successful transmission as part of a contention resolution). The common resources can be cell specific resources (e.g., any UE camped on the cell may use the common resources). In addition, the resources may include multiple resources (e.g., a list of resources).

Another technique to send small amounts of data is the use of a PUR procedure. Generally, a transmission using a PUR allows the UE to transmit a small amount of data while being in an RRC idle state without performing a random access procedure.

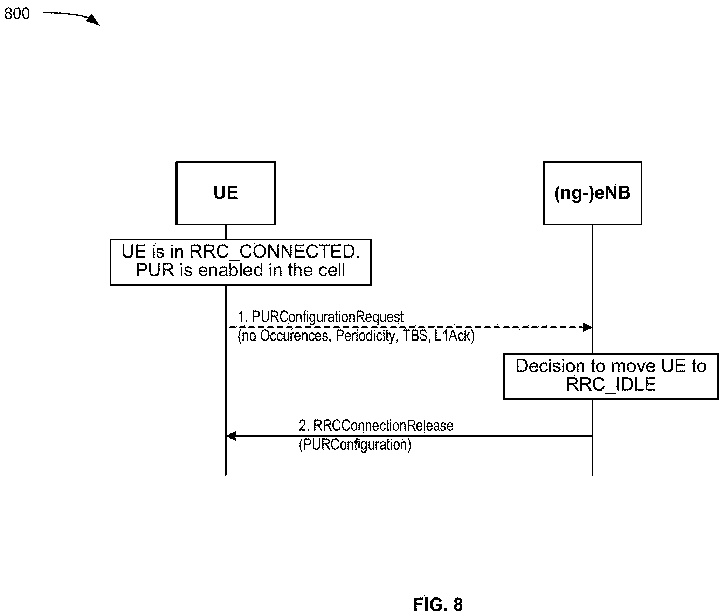

FIG. 8 illustrates an example 800 of a PUR configuration procedure, in accordance with some embodiments. Here, a UE is in an RRC connected state and is camped on a cell. The use of PURs is enabled in the cell. The UE can send a request to a base station for a PUR configuration using RRC signaling (in which the UE can indicate the periodicity and size of uplink data to be sent using the PUR, such as in a PURConfigurationRequest). The base station transitions the UE to an RRC idle state and sends RRC signaling indicating the PUR configuration (e.g., in an RRCConnectinoRelease).

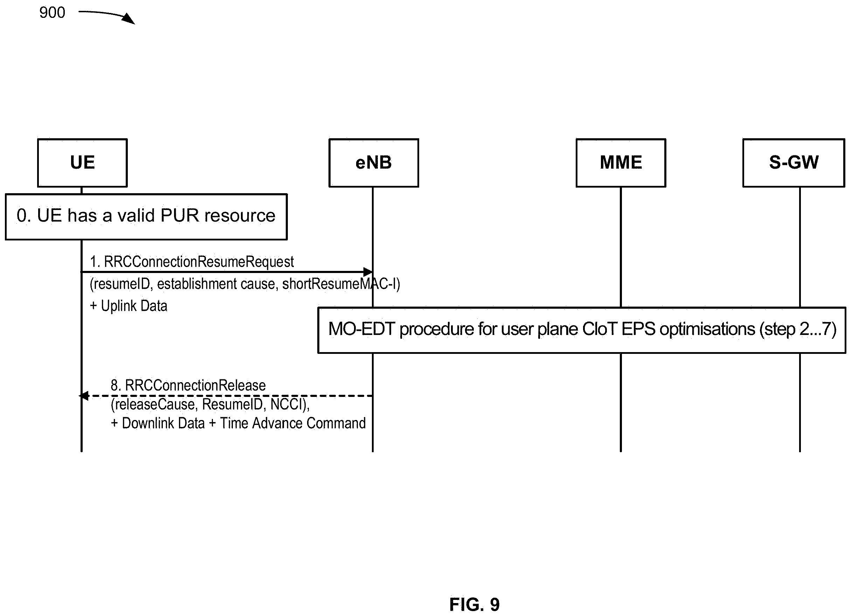

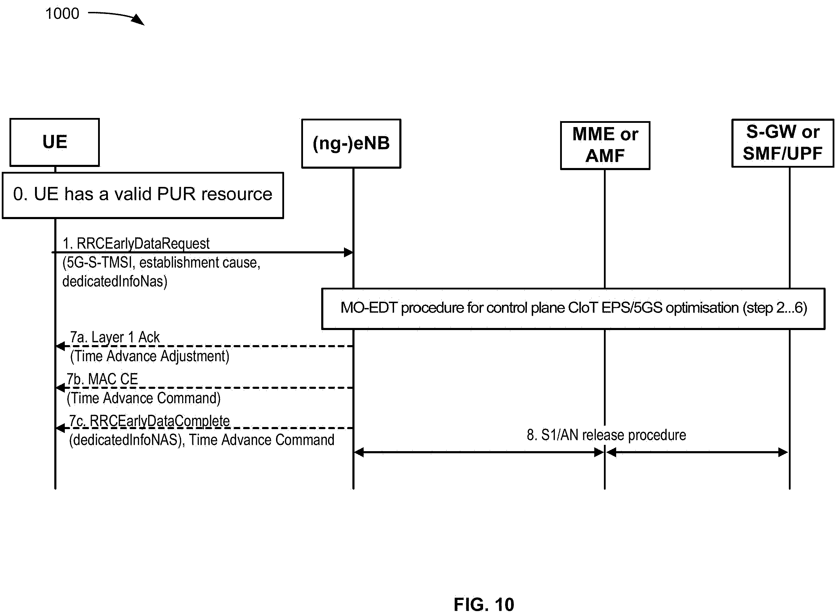

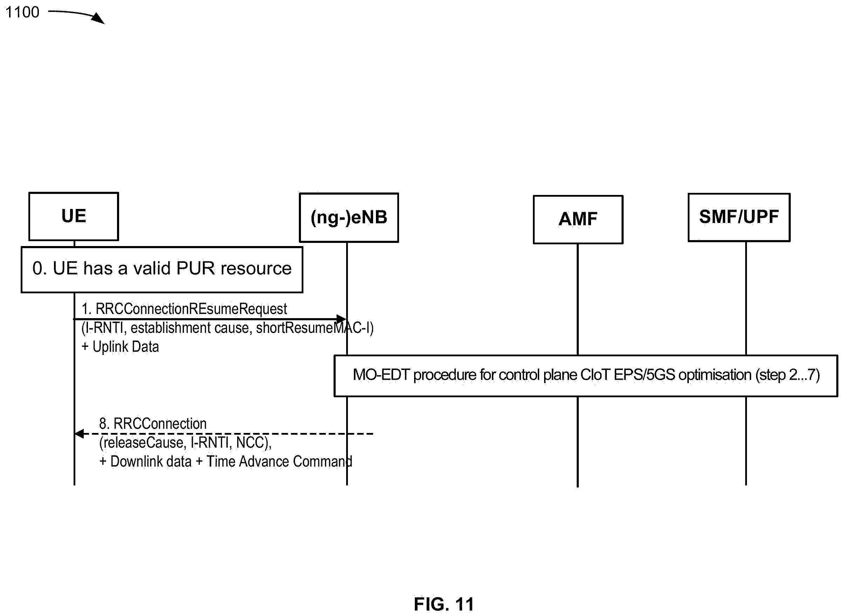

FIG. 9 illustrates an example 900 of a PUR transmission procedure for a user plane, in accordance with some embodiments. FIG. 10 illustrates an example 1000 of a PUR transmission procedure for a control plane, in accordance with some embodiments. FIG. 11 illustrates another example 1100 of a PUR transmission procedure for a user plane, in accordance with some embodiments. In the examples 900-1100, the UE has been configured with PUR (per the example 800) and needs to send uplink data. The data can be sent in a Msg 3 using an RRC early data request (RRCEarlyDataRequest) and/or an RRC connection resume request (RRCConnectionResumeRequest), similar to an Mo-EDT procedure. The base station (network) can respond with layer 1 (L1), layer 2 (L2), or layer 3 (L3) messages including. An L1 message can be an acknowledgement (ACK) usable in a CP solution. An L2 message can correspond to an L2 timing advance command (TAC) usable in a CP solution. An L3 message, such as a RRCConnectionRelease message similar to what is used in the Mo-EDT procedure, can be used for both the CP and UP solutions (and may be mandatory in a UE solution).

The examples 300-1100 are further described in 3GPP TS 36.300 V18.1.0 (2024-03), the content of which is herein incorporated by reference in its entirety.

Referring back to examples 800-1100, a PUR can be common to two UEs. In such a case, the use of the PUR is contention free because the likelihood of contention is fairly low. As such, no contention resolution procedure may need to be followed. A PUR resource can be only valid in the cell which provided the PUR configuration. The UE can request PUR from a base station that provides the cell. In addition to configuring the PUR (where it is only valid in the cell provided by the base station), the base station can configure the UE with a demodulation reference signal (DMRS) index. The UE can use the pre-configured DMRS index in a PUR transmission to identify itself.

To accommodate more UEs, it may be possible that a PUR can be common to a larger number of UEs (e.g., NB-IoT devices), where this number is more than two. If so, the PUR can be considered as a contention-based shared resource. Accordingly, a response from a base station (e.g., a Msg4) can indicate to a UE whether its uplink data transmission using the PUR (e.g., a Msg3) was successfully received or not. The use of the Msg4 as part of the contention resolution (as further described herein below) can also be similarly and equivalently used in an MO-EDT procedure.

Further, to accommodate mobility (e.g., in the case of NTN and other cases), the PUR configured for a UE can remain valid across multiple cells and/or base stations (e.g., implemented in or having components implemented in communications satellites). As such, the UE need not be reconfigured for PUR transmissions when the network coverage changes as long as the new cell and/or new base station are identified on a list for which the existing PUR configuration is valid.

Different cells and/or base stations can be associated with different uplink timings (e.g., TAs). Because a PUR procedure may not use RACH preamble (e.g., a Msg1) or a RAR (e.g., a Msg2) that indicates a TA, the UE uplink timing on the neighbor cell and/or base station need to be addressed. Particularly, such a cell and/or base station may need to have the same or similar TA as the current serving cell.

Referring back to FIG. 2, a preconfigured PUR resource can be used when the UE 204 moves to different network nodes and/or cells (e.g., from the network node 221 to the network node 222 and/or from the cell 251 to the cell 252). This can be beneficial in many contexts. On example context is low earth orbiting (LEO) satellites, where each satellite can only cover one geographical area for about 200 seconds. Uplink (UL) timing synchronization should be guaranteed because no preamble (e.g., a Msg1) is transmitted and no TA is provided (e.g., in a Msg2). As such, when a change occurs from a current network coverage to a new network coverage (e.g., the cell coverage changes from the network node 221 to the network node 222, and/or the serving cell changes from being the cell 251 to the cell 251), the uplink timing of the new network coverage needs to be the same or similar (e.g., within an acceptable tolerance) as the current network coverage.

To deal with such an uplink timing challenge, the PUR configuration of the UE 204 may be limited to the set of cells and/or network nodes that have the same or similar uplink timings. In other words, the network can provide a list of cells/network nodes (e.g., base stations or satellites), where a pre-configured set of PUR resources is applicable. Those cells/network nodes may be restricted (e.g., according to RACH-less Handover). In FIG. 2, the restrictions can allow the PUR configuration to be valid for multiple cells/network nodes in scenarios including: (1) intra-satellite handover with the same feeder link (e.g., with the same gateway/gNB); intra-satellite handover with different feeder links (e.g., with a gateway/gNB switch); (3) inter-satellite handover with a gateway/gNB switch; and (4) inter-satellite handover with the same gateway/gNB.

For scenarios (2)-(4), the RACH-less handover may be possible, assuming the following can be satisfied when a UE UL transmission synchronization can be maintained by applying pre-compensation using the assistance information (e.g., based on epoch time, ephemeris, common TA, etc. of the target cell). UL synchronization requirement specified in Table 7.1C.2-1 of 3GPP TS38.133 V17.13.0 (2024-03) (the content of which is incorporated herein by reference in its entirety) applies to the first UL transmission in the target cell. The base station is expected to provide valid assistance information of the target cell to a UE. The base station is also expected to ensure the UE can perform the UL transmission while respecting common TA and UE processing time.

Further, a current source of the current network coverage (e.g., the network node 221 providing the cell 251) can coordinate with a new source in the new network coverage (e.g., the network node 222 providing the cell 252) on the PUR configuration. For example, the current source can send at least a portion of the PUR configuration to the new source. The portion can indicate to the new source at least the location in time and/or frequency of PURs that the UE 204 can use for its uplink data transmission, the PUR periodicity, and/or the possible data sizes.

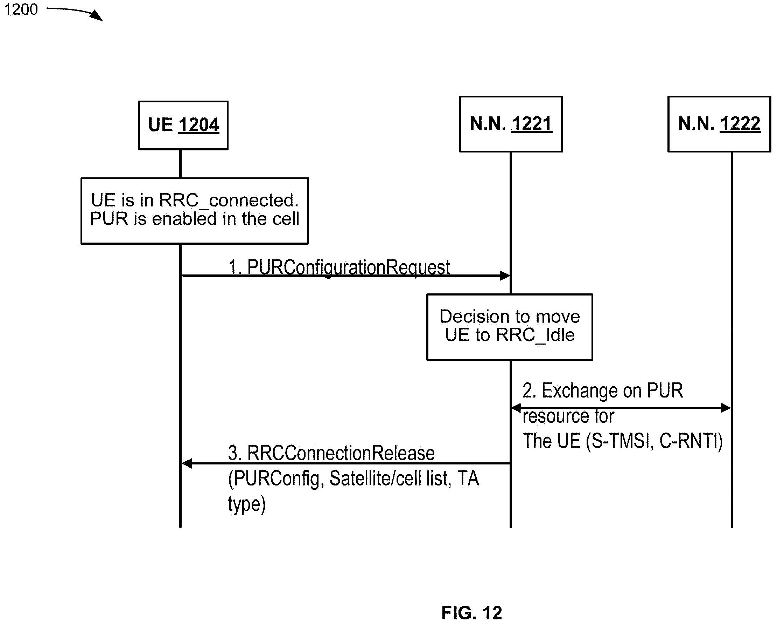

FIG. 12 illustrates an example 1200 of a PUR configuration procedure for multiple cells and/or base stations, in accordance with some embodiments. A UE 1204 (an example of the UE 204) uses a first cell (e.g., a serving cell, such as the cell 251) provided by a first network node 1221 (e.g., the network node 221). The UE 1204 is in an RRC connected state. The use of PURs is enabled in the first cell. The UE can send a request to the first network node 1221 for PUR configuration using RRC signaling (in which the UE can indicate the periodicity and size of uplink data to be sent using the PUR, such as in a PURConfigurationRequest). The first network node 1221 can decide to move the UE 1204 to an RRC idle state. The first network node 1221 can define a PUR configuration for the UE 1204. This PUR configuration can indicate, among other things, the usable PURs (e.g., their location in time and frequency, a DMRS index to use, etc.). In addition, the PUR configuration can include or can be associated with a list of cells and/or network nodes (e.g., satellites including base stations implemented entirely or partially thereon) where the PURs remain valid. Further, the PUR configuration can include or can be associated with a TA type configured for the UE 1204. The TA type can correspond to one of: re-using a serving cell's TA on target cells/network nodes (e.g., including base stations implemented entirely or partially thereon), performing an initial access UL timing pre-compensation on cells/network nodes (e.g., including base stations implemented entirely or partially thereon), using the same TA for a cell configured by the network (e.g., the cells of this group can be identified on the list, such that the UE 1204 does not need to re-acquire TA when it moves among the cells in the group), or that no restriction is imposed on how to acquire a TA. Further, the PUR configuration includes or can be associated with a validity duration (during which the PUR configuration remains valid) and/or a set of conditions for the UE 1204 to trigger a PUR transmission. The set of conditions can include a condition common to multiple cells and/or network nodes (e.g., including base stations implemented entirely or partially thereon). Additionally, or alternatively, the set of conditions can include a condition configured specifically only for or provided only by a cell (e.g., a separate condition for each cell, where the cell can be a serving cell or a neighbor cell).

If the PUR configuration is associated with a cell provided by the second network node 1222 or the same logical cell provided by the first network node 1221 and the second network node 1222, the first network node 1221 can exchange information about the PUR configuration with the second network ndoe 1222. This information exchange can be through of an Xn exchange between a source cell and a target cell, whereby the source cell coordinates with neighbor cell on the PUR resources configured for the UE 12204. The exchange can identify the UE 1204 (e.g., by including serving temporary mobile subscriber identity (S-TMSI) of the UE 1204, a cell radio network temporary identifier (C-RNTI) of the UE 1204, a DMRS index configured for the UE 1204). The exchange can also include a portion of the configuration information (e.g., the location in time and frequency of the PUR resources).

The network node 1221 can send signaling information (e.g., RRC signaling that includes one or more RRCConnectinoRelease messages) to the UE 1204. The signaling information indicates the PUR configuration and, if not included in the PUR configuration, the list of cells and/or network nodes, the TA type, the validity duration, and/or the set of conditions.

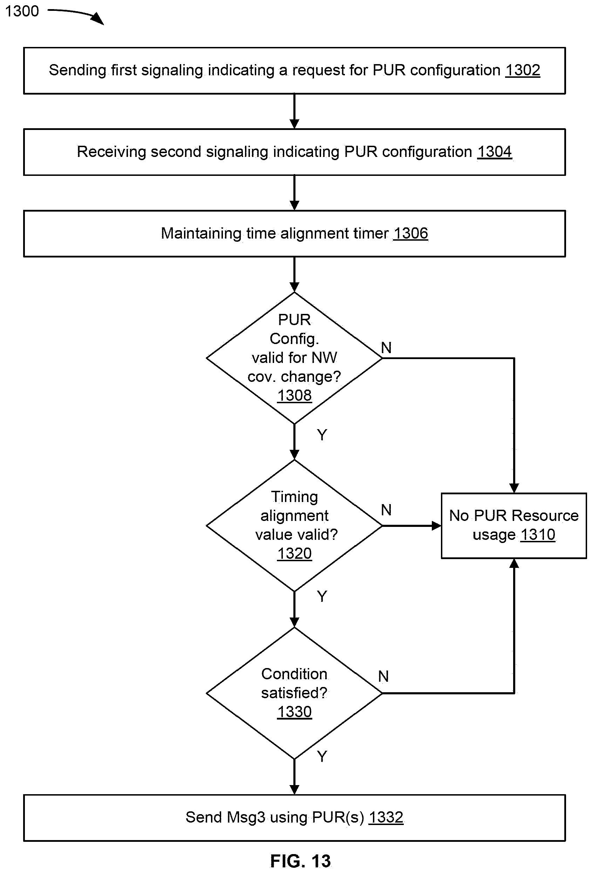

FIG. 13 illustrates an example of an operational flow/algorithmic structure 1300 implemented by a UE as part of a PUR configuration and transmission procedure for multiple cells and/or base stations, in accordance with some embodiments. The operational flow/algorithmic structure 1300 can be performed by components of the UE including, for example, processors thereof. The UE can be any of the UEs described herein (e.g., the UE 1204). The UE can be any of the UEs described herein (e.g., the UE 1204). In some embodiments, the operational flow/algorithmic structure 1300 may be implemented by executing instructions stored in a tangible, non-transitory, computer-readable storage medium, such as a memory of the UE. While the operational flow/algorithmic structure 1300 is described using steps in a specific sequence, it should be understood that the present disclosure contemplates that the described steps may be performed in different sequences than the sequence illustrated, and certain described steps may be omitted or not performed altogether.

In an example, the operational flow/algorithmic structure 1300 includes, at 1302, sending first signaling indicating a request for a PUR configuration. The first signaling can be RRC signaling, where the request can correspond to a PURConfigurationRequest.

In an example, the operational flow/algorithmic structure 1300 includes, at 1304, receiving second signaling indicating the PUR configuration. The second signaling can be RRC signaling that includes one or more RRCConnectionRelease messages. In addition to the PUR configuration, the second signaling can indicate list of cells and/or network nodes for which the PUR configuration is valid, a TA type, a validity duration of the PUR configuration, and/or a set of conditions to trigger the use of a PUR.

In an example, the operational flow/algorithmic structure 1300 includes, at 1306, maintaining a TAT. When the UE receives the PUR configuration, the TAT is started. The PUR configuration remains valid during the validity duration (e.g., as long as a timing alignment value is valid by, for instance, not exceeding the validity duration, the PUR configuration is valid). Upon a network coverage change (e.g., a cell change and/or network node change such as a satellite change), the TAT can be restarted, continue to run, and/or another action can be performed. For instance, if the configured TA type indicates an initial TA acquisition, the TAT is restarted after the initial access timing pre-compensation at the target cell/network node (e.g., satellite) is performed. If the configured TA type indicates to re-use previous TAT (e.g., use the same TA of the previous serving cell or the TA is common to a group of cells/network nodes), the TAT from the previous serving cell keeps running (as long as no TAC is received). If the TA type indicates that no restriction applies, the UE can determine its uplink timing (e.g., can use a specific UE-implementation for this determination).

In an example, the operational flow/algorithmic structure 1300 includes, at 1308, whether the PUR configuration is valid for a network coverage change. For example, the network coverage change can be from a current serving cell to a new cell and/or from a current network node (e.g., satellite) to a new network node. The UE can determine whether the new cell (e.g., given its cell identifier, such as its physical cell identifier (PCID) and/or the base station (e.g., given some base station identifier) is included in the list of cells and/or network nodes associated with the PUR configuration. If so, the PUR configuration is valid for the network change (e.g., for the new cell and/or new network node). In this case, operational flow/algorithmic structure 1300 may move to 1320. Otherwise, 1310 may be performed.

In an example, the operational flow/algorithmic structure 1300 includes, at 1310, determining that no PUR resource configured according to the PUR configuration is available for usage. As such, the UE foregoes performing an uplink data transmission that uses the PUR configuration.

In an example, the operational flow/algorithmic structure 1300 includes, at 1320, determining whether a timing alignment value is valid. The timing alignment value can correspond to the current TAT value and is valid if it is smaller than the configured value of the validity duration. In this case, operational flow/algorithmic structure 1300 may move to 1330. Otherwise, 1310 may be performed.

In an example, the operational flow/algorithmic structure 1300 includes, at 1330, determining whether a condition to trigger a PUR usage is satisfied or not. One or more conditions can be configured. If multiple conditions are configured, the PUR usage is triggered upon any, a combination of, or all of the conditions are satisfied depending on the type of the configured conditions. Generally, a reference signal received power (RSRP) threshold can be defined. In this case, an RSRP condition is satisfied when an RSRP measurement is smaller than the RSRP threshold. However, in certain scenarios (e.g., an NTN that uses satellites), the RSRP condition may be not too relevant. For instance, the RSRP condition in NTN is less meaningful as in TN network, because even at the cell edge, the RSRP may still be very good in an NTN. However, the UE at cell edge would be far away from satellite, which may lead to UL transmission failure (e.g., due to uplink timing issues, whereby no TA is indicated to the UE as part of the PUR procedure). As such, a configured condition (which may be more useful in NTN scenarios) can be a distance-based condition or a propagation delay-based condition. As far as a distance-based condition, a distance threshold can be configured. If a distance between the UE and the new network node (e.g., the new satellite) is greater than the distance threshold, this condition is dissatisfied. If the distance is smaller than the distance threshold, this condition is satisfied. The UE can estimate the distance based on its own location and received location information about the network node (e.g., based on epoch time, ephemeris). Another example of the distance-based condition involves a distance between the UE and a reference location of the new cell (e.g., the cell's center). Here also, if the distance is greater than the distance threshold, this condition is dissatisfied. If the distance is smaller than the distance threshold, this condition is satisfied. The UE can receive information about the reference location. Given its current location, can estimate the distance. As far as the propagation delay-based condition, a propagation delay threshold can be configured. If a propagation delay of a signal between the UE and the new network node (e.g., the new satellite) is greater than the propagation delay threshold, this condition is dissatisfied. If the distance is smaller than the propagation delay threshold, this condition is satisfied. The UE can estimate the propagation delay based on based on its own location and received location information about the network node (e.g., based on epoch time, ephemeris). If the condition is satisfied, operational flow/algorithmic structure 1300 may move to 1332. Otherwise, 1310 may be performed.

In an example, the operational flow/algorithmic structure 1300 includes, at 1332, sending a Msg3 using one or more PUR(s) configured according to the PUR configuration. The Msg3 can carry data and can be sent without the need to send a Msg1 or received a Msg2.

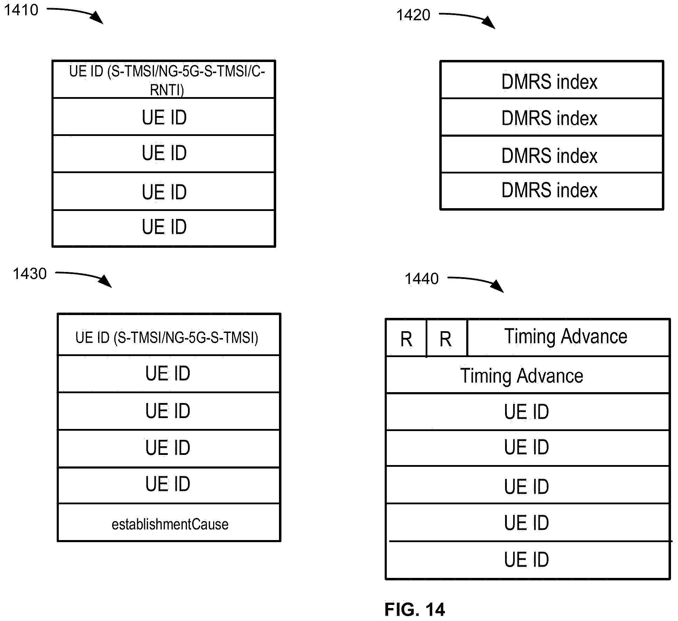

FIG. 14 illustrates examples of MAC CEs to acknowledge data transmission, in accordance with some embodiments. Here, the MAC CEs are described in connection with acknowledging a successful PUR transmission (e.g., as a Msg4 in response to a Msg3). However, the embodiments are not limited as such. Instead, the embodiments similarly and equivalently apply to a successful EDT transmission.

Generally, the MAC CE can include information about the UE for contention resolution purposes. In one example, this information can be available from the PUR transmission (e.g., from the Msg3). Different options exist for using a MAC CE for a contention resolution purpose.

In a first option, an L2 MAC CE can be defined for contention resolution for specific use in a PUR procedure. This MAC CE can include a new logical channel identifier (LCID) or a new extended logical channel identifier (eLCID). In the example 1410, the MAC CE includes an identifier of the UE to which the acknowledgement is targeted (e.g., a UE ID). This UE ID can be available from the Msg3 and can be five bytes long (e.g., including LTE S-TMSI with 4 bytes) or four bytes long (e.g., including 5G serving TMSI (S-TMSI or NG-5G-S-TMSI), or C-RNTI assigned in PUR-Config with two bytes). In the example 1420, the MAC CE includes the UE's DMRS index. This DMRS index was configured for the PUR transmission and can be available from the Msg3. In the example 1439, the MAC CE uses one or more RRC fields from an RRC early data request (e.g., RRCEarlyDataRequest). Such fields can include a UE identifier (e.g. an S-TMSI or NG-5G-S-TMSI) and/or an establishment cause (e.g., PUR related case).

In a second option 1440, a TAC MA CE extension can be used. Particularly, a TAC MAC CE can use a new LCID or eLCID. In addition to indicating a value for a TA, the TAC MAC CE can include a user ID.

Upon receiving any of the above MAC CEs, the UE can determine the UE-related information indicated by the received MAC (e.g., the UE ID, DMRS index, etc.). If such information is determined, the UE can determine that the data included in the PUR transmission was successfully received.

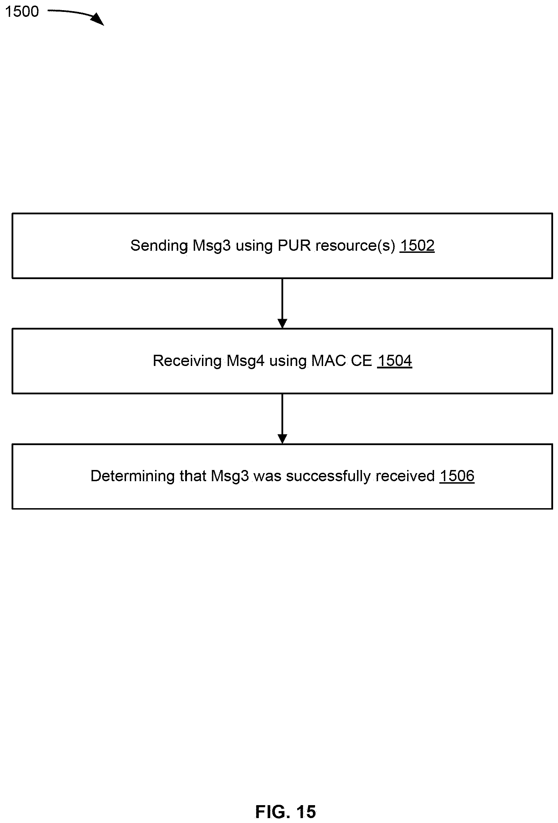

FIG. 15 illustrates an example of an operational flow/algorithmic structure 1500 implemented by a UE for receiving a MAC CE acknowledging data transmission, in accordance with some embodiments. The operational flow/algorithmic structure 1500 can be performed by components of the UE including, for example, processors thereof. The UE can be any of the UEs described herein (e.g., the UE 1204). In some embodiments, the operational flow/algorithmic structure 1500 may be implemented by executing instructions stored in a tangible, non-transitory, computer-readable storage medium, such as a memory of the UE. While the operational flow/algorithmic structure 1500 is described using steps in a specific sequence, it should be understood that the present disclosure contemplates that the described steps may be performed in different sequences than the sequence illustrated, and certain described steps may be omitted or not performed altogether.

In an example, the operational flow/algorithmic structure 1500 includes, at 1502, sending a Msg 3 using one or more PUR resources. This transmission can follow a PUR procedure, such as the one described in FIG. 12. The Msg 3 can be sent without sending a RACH preamble or receiving a RAR.

In an example, the operational flow/algorithmic structure 1500 includes, at 1504, receiving a Msg4 using a MAC CE. The MAC CE can be any of the MAC CEs described in FIG. 14 and can include UE-related information (e.g., the UE ID, DMRS index, etc.).

In an example, the operational flow/algorithmic structure 1500 includes, at 1506, determining that the Msg3 was successfully received. This determination can be based on the Msg4. In particular, the UE can determine that the MAC CE indicates the UE-related information and, accordingly, determines the transmission success.

Herein above, the operational flow/algorithmic structure 1500 is described in connection with a Msg3 sent using PUR resource(s) using a PUR resource. However, the operational flow/algorithmic structure 1500 similarly and equivalently applies to sending a Msg3 using an MO-EDT procedure. In this case, the MAC CE is used to indicates the successful reception of the Msg3 sent using EDT resources.

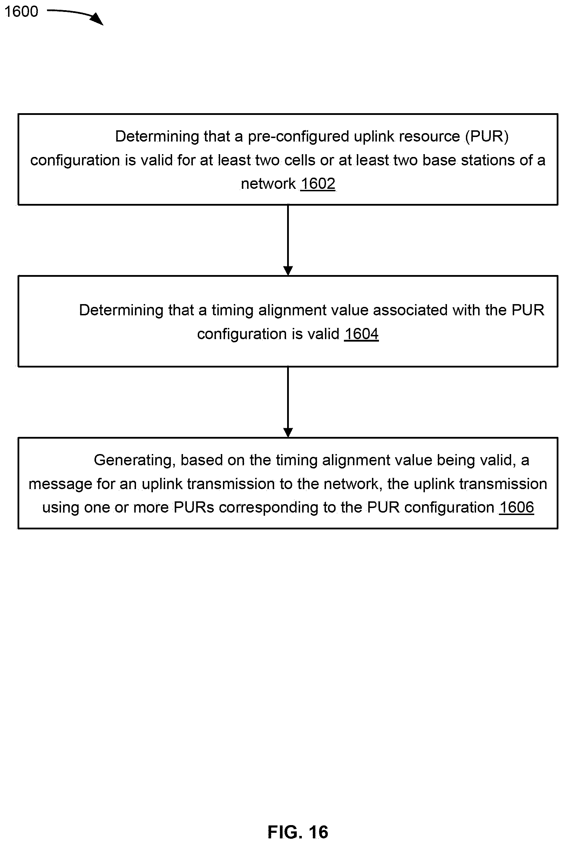

FIG. 16 illustrates an example of an operational flow/algorithmic structure 1600 implemented by a UE as part for uplink transmissions using PURs, in accordance with some embodiments. The operational flow/algorithmic structure 1600 can be performed by one or more components of the UE including, for example, processing circuitry thereof. The UE can be any of the UEs described herein (e.g., the UE 1204). In some embodiments, the operational flow/algorithmic structure 1600 may be implemented by executing instructions stored in a tangible, non-transitory, computer-readable storage medium, such as a memory of the UE. While the operational flow/algorithmic structure 1600 is described using steps in a specific sequence, it should be understood that the present disclosure contemplates that the described steps may be performed in different sequences than the sequence illustrated, and certain described steps may be omitted or not performed altogether.

In an example, the operational flow/algorithmic structure 1600 includes, at 1602, determining that a PUR configuration is valid for at least two cells or at least two base stations of a network. For instance, the UE can send a request for the PUR configuration to a first base station providing a first cell. The UE can receive back signaling information indicating the PUR configuration and a list of cells and/or base stations for which the PUR configuration is valid. This list can identify the first cell and a second cell (provided by the same first base station or the second base station) and/or the second base station (providing the same first cell or the second cell). In an example, each of the base stations is an NTN node such as by having its components, or at least some of its components, implemented on a communications satellite.

In an example, the operational flow/algorithmic structure 1600 includes, at 1604, determining that a timing alignment value associated with the PUR configuration is valid. For instance, the PUR configuration can indicate a value for a validity duration. The signaling information can also include a TA type. Depending on the TA type, a TAT can be maintained. A current value of the TAT can be compared to the validity duration to determine whether the PUR configuration is valid for current usage.

In an example, the operational flow/algorithmic structure 1600 includes, at 1606, generating, based on the timing alignment value being valid, a message for an uplink transmission to the network, the uplink transmission using one or more PURs corresponding to the PUR configuration. For instance, this message is a Msg3 that includes data. The uplink data transmission can follow the PUR procedure. The UE can also receive a Msg4 back including UE-related information. Based on the Msg4, the UE can determine that the Msg3 was successfully received.

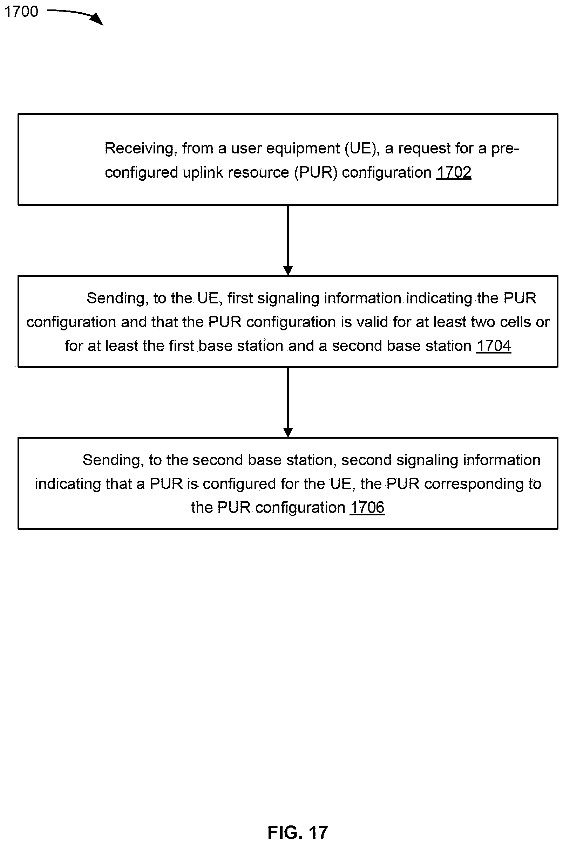

FIG. 17 illustrates an example of an operational flow/algorithmic structure 1700 implemented by a network as part for uplink transmissions using PURs, in accordance with some embodiments. The operational flow/algorithmic structure 1700 can be implemented by one or more components of a (e.g., by a base station thereof and/or processors of the base station). The network can be any of the networks described herein. In some embodiments, the operational flow/algorithmic structure 1700 may be implemented by executing instructions stored in a tangible, non-transitory, computer-readable storage medium, such as a memory of the base station. While the operational flow/algorithmic structure 1700 is described using steps in a specific sequence, it should be understood that the present disclosure contemplates that the described steps may be performed in different sequences than the sequence illustrated, and certain described steps may be omitted or not performed altogether.

In an example, the operational flow/algorithmic structure 1700 includes, at 1702, receiving, from UE, a request for a PUR configuration. The request can be received following the PUR procedure described in FIG. 12.

In an example, the operational flow/algorithmic structure 1700 includes, at 1704, sending, to the UE, first signaling information indicating the PUR configuration and that the PUR configuration is valid for at least two cells or for at least the first base station and a second base station. The first signaling information can include an RRC connection release message including the PUR configuration in addition to other PUR-related information such as a list of cells/base stations, a TA type, a validity duration, and conditions to trigger a PUR transmission.

In an example, the operational flow/algorithmic structure 1700 includes, at 1706, sending, to the second base station, second signaling information indicating that a PUR is configured for the UE, the PUR corresponding to the PUR configuration. The signaling information can identify the UE and include at least a portion of the PUR configuration such that the second base station can determine the resources that the UE may use for a PUR transmission.

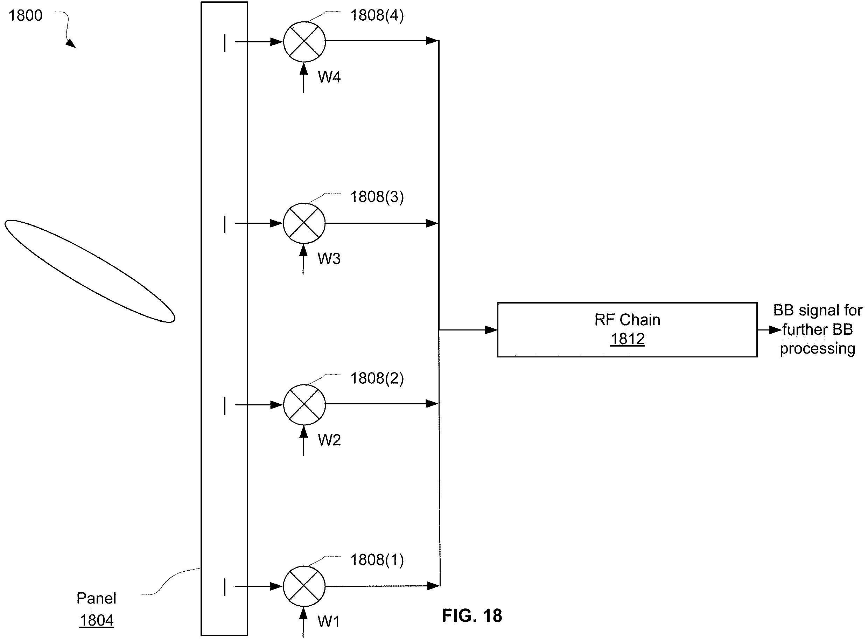

FIG. 18 illustrates receive components 1800 of a UE (e.g., the UE 204), in accordance with some embodiments. The receive components 1800 may include an antenna panel 1804 that includes a number of antenna elements. The panel 1804 is shown with four antenna elements, but other embodiments may include other numbers.

The antenna panel 1804 may be coupled to analog beamforming (BF) components that include a number of phase shifters 1808(1)-1808(4). The phase shifters 1808(1)-1808(4) may be coupled with a radio-frequency (RF) chain 1812. The RF chain 1812 may amplify a receive analog RF signal, down-convert the RF signal to baseband, and convert the analog baseband signal to a digital baseband signal that may be provided to a baseband processor for further processing.

In various embodiments, control circuitry, which may reside in a baseband processor, may provide BF weights (for example W1 - W4), which may represent phase shift values, to the phase shifters 1808(1)-1808(4) to provide a receive beam at the antenna panel 1804. These BF weights may be determined based on the channel-based beamforming.

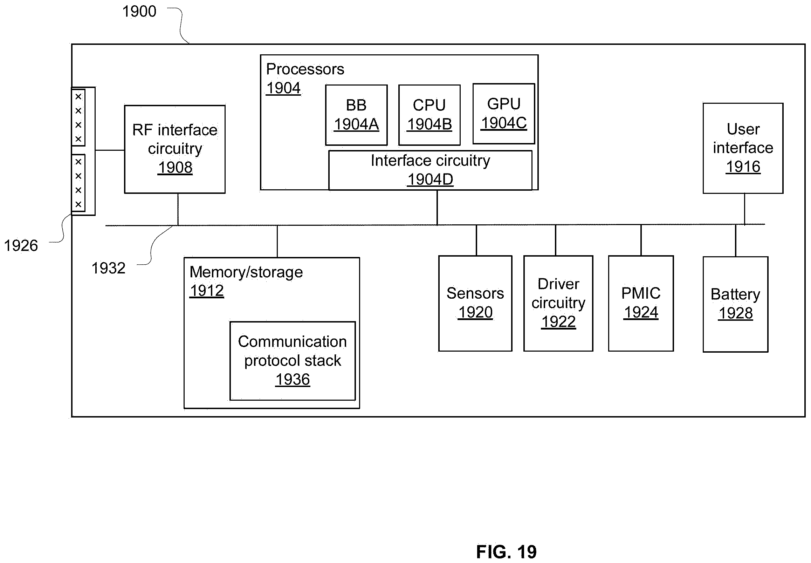

FIG. 19 illustrates a UE 1900, in accordance with some embodiments. The UE 1900 may be similar to and substantially interchangeable with UE 204 of FIG. 2. Particularly, the UE 1900 can receive and store configuration information that indicates a PUR configuration and related parameters to use the PUR configuration. Based on this configuration information, the UE can send a small amount data in a Msg3 using the PUR configuration without sending a RACH message (e.g., a Msg1) or receiving a RAR message (e.g., a Msg2). The UE can also receive a Msg4 that includes UE-related information, where the Msg4 can indicate that the Msg3 was successfully received.

Similar to that described above with respect to UE 204, the UE 1900 may be any mobile or non-mobile computing device, such as mobile phones, computers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, actuators, etc.), video surveillance/monitoring devices (for example, cameras, video cameras, etc.), wearable devices, IoT devices, NB-IoT devices, or relaxed-IoT devices. In some embodiments, the UE may be a reduced capacity UE or NR-Light UE.

The UE 1900 may include processors 1904, RF interface circuitry 1908, memory/storage 1912, user interface 1916, sensors 1920, driver circuitry 1922, power management integrated circuit (PMIC) 1924, and battery 1928. The components of the UE 1900 may be implemented as integrated circuits (ICs), portions thereof, discrete electronic devices, or other modules, logic, hardware, software, firmware, or a combination thereof. The block diagram of FIG. 19 is intended to show a high-level view of some of the components of the UE 1900. However, some of the components shown may be omitted, additional components may be present, and different arrangements of the components shown may occur in other implementations.

The components of the UE 1900 may be coupled with various other components over one or more interconnects 1932, which may represent any type of interface, input/output, bus (local, system, or expansion), transmission line, trace, optical connection, etc. that allows various circuit components (on common or different chips or chipsets) to interact with one another.

The processors 1904 may include processor circuitry, such as baseband processor circuitry (BB) 1904A, central processor unit circuitry (CPU) 1904B, and graphics processor unit circuitry (GPU) 1904C. The processors 1904 may include any type of circuitry or processor circuitry that executes or otherwise operates computer-executable instructions, such as program code, software modules, or functional processes from memory/storage 1912 to cause the UE 1900 to perform operations as described herein.

In some embodiments, the baseband processor circuitry 1904A may access a communication protocol stack 1936 in the memory/storage 1912 to communicate over a 3GPP compatible network. In general, the baseband processor circuitry 1904A may access the communication protocol stack to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a non-access stratum "NAS" layer. In some embodiments, the PHY layer operations may additionally/alternatively be performed by the components of the RF interface circuitry 1908.

The baseband processor circuitry 1904A may generate or process baseband signals or waveforms that carry information in 3GPP-compatible networks. In some embodiments, the waveforms for NR may be based on cyclic prefix OFDM (CP-OFDM) in the uplink or downlink, and discrete Fourier transform spread OFDM (DFT-S-OFDM) in the uplink.

The baseband processor circuitry 1904A may also access group information from memory/storage 1912 to determine search space groups in which a number of repetitions of a PDCCH may be transmitted.

The memory/storage 1912 may include any type of volatile or non-volatile memory that may be distributed throughout the UE 1900. In some embodiments, some of the memory/storage 1912 may be located on the processors 1904 themselves (for example, L1 and L2 cache), while other memory/storage 1912 is external to the processors 1904 but accessible thereto via a memory interface. The memory/storage 1912 may include any suitable volatile or non-volatile memory, such as, but not limited to, dynamic random-access memory (DRAM), static random-access memory (SRAM), erasable programmable read-only memory (EPROM), electrically erasable programmable read-only memory (EEPROM), Flash memory, solid-state memory, or any other type of memory device technology.

The RF interface circuitry 1908 may include transceiver circuitry and a radio frequency front module (RFEM) that allows the UE 1900 to communicate with other devices over a radio access network. The RF interface circuitry 1908 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via an antenna 1950 and proceed to filter and amplify (with a low-noise amplifier) the signal. The signal may be provided to a receiver of the transceiver that down-converts the RF signal into a baseband signal that is provided to the baseband processor of the processors 1904.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 1950.

In various embodiments, the RF interface circuitry 1908 may be configured to transmit/receive signals in a manner compatible with NR access technologies.

The antenna 1950 may include a number of antenna elements that each convert electrical signals into radio waves to travel through the air and to convert received radio waves into electrical signals. The antenna elements may be arranged into one or more antenna panels. The antenna 1950 may have antenna panels that are omnidirectional, directional, or a combination thereof to enable beamforming and multiple input, multiple output communications. The antenna 1950 may include microstrip antennas, printed antennas fabricated on the surface of one or more printed circuit boards, patch antennas, phased array antennas, etc. The antenna 1950 may have one or more panels designed for specific frequency bands including bands in FR1 or FR2.

The user interface circuitry 1916 includes various input/output (I/O) devices designed to enable user interaction with the UE 1900. The user interface 1916 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators, such as light emitting diodes (LEDs) and multi-character visual outputs, or more complex outputs, such as display devices or touchscreens (for example, liquid crystal displays (LCDs), LED displays, quantum dot displays, projectors, etc.), with the output of characters, graphics, multimedia objects, and the like being generated or produced from the operation of the UE 1900.

The sensors 1920 may include devices, modules, or subsystems whose purpose is to detect events or changes in its environment and send the information (sensor data) about the detected events to some other device, module, subsystem, etc. Examples of such sensors include, inter alia, inertia measurement units comprising accelerometers; gyroscopes; or magnetometers; microelectromechanical systems or nanoelectromechanical systems comprising 3-axis accelerometers; 3-axis gyroscopes; or magnetometers; level sensors; flow sensors; temperature sensors (for example, thermistors); pressure sensors; barometric pressure sensors; gravimeters; altimeters; image capture devices (for example; cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 1922 may include software and hardware elements that operate to control particular devices that are embedded in the UE 1900, attached to the UE 1900, or otherwise communicatively coupled with the UE 1900. The driver circuitry 1922 may include individual drivers allowing other components to interact with or control various input/output (I/O) devices that may be present within, or connected to, the UE 1900. For example, driver circuitry 1922 may include a display driver to control and allow access to a display device, a touchscreen driver to control and allow access to a touchscreen interface, sensor drivers to obtain sensor readings of sensor circuitry 1920 and control and allow access to sensor circuitry 1920, drivers to obtain actuator positions of electro-mechanic components or control and allow access to the electro-mechanic components, a camera driver to control and allow access to an embedded image capture device, audio drivers to control and allow access to one or more audio devices.

The PMIC 1924 may manage power provided to various components of the UE 1900. In particular, with respect to the processors 1904, the PMIC 1924 may control power-source selection, voltage scaling, battery charging, or DC-to-DC conversion.

In some embodiments, the PMIC 1924 may control, or otherwise be part of, various power saving mechanisms of the UE 1900. For example, if the platform UE is in an RRC_Connected state, where it is still connected to the RAN node as it expects to receive traffic shortly, then it may enter a state known as Discontinuous Reception Mode (DRX) after a period of inactivity. During this state, the UE 1900 may power down for brief intervals of time and thus save power. If there is no data traffic activity for an extended period of time, then the UE 1900 may transition off to an RRC_Idle state, where it disconnects from the network and does not perform operations, such as channel quality feedback, handover, etc. The UE 1900 goes into a very low power state and it performs paging where again it periodically wakes up to listen to the network and then powers down again. The UE 1900 may not receive data in this state; in order to receive data, it must transition back to RRC_Connected state. An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

A battery 1928 may power the UE 1900, although in some examples the UE 1900 may be mounted deployed in a fixed location and may have a power supply coupled to an electrical grid. The battery 1928 may be a lithium-ion battery, a metal-air battery, such as a zinc-air battery, an aluminum-air battery, a lithium-air battery, and the like. In some implementations, such as in vehicle-based applications, the battery 1928 may be a typical lead-acid automotive battery.

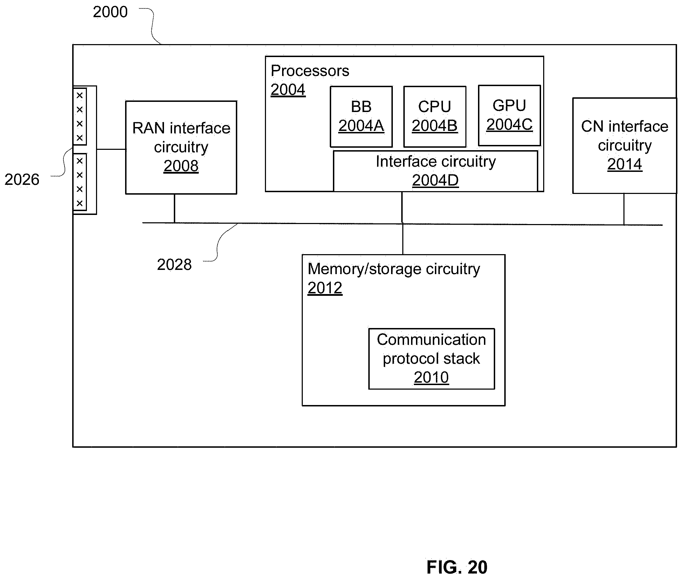

FIG. 20 illustrates a gNB 2000, in accordance with some embodiments. The gNB 2000 may be similar to and substantially interchangeable with the network node 108 of FIG. 1 and/or any other base station described herein. Particularly, the gNB 2000 can send, to a UE, configuration information that indicates a PUR configuration and related parameters for using the PUR configuration. The gNB 2000 can also inform another base station about the PUR configuration set up for the UE. The gNB 2000 can receive a Msg3 from the UE according to the PUR configuration, where this message can include data. The gNB 2000 can respond with a Msg4 indicating the Msg3 was successfully received.

The gNB 2000 may include processors 2004, RAN interface circuitry 2008, core network (CN) interface circuitry 2012, and memory/storage circuitry 2016.

The components of the gNB 2000 may be coupled with various other components over one or more interconnects 2028.

The processors 2004, RAN interface circuitry 2008, memory/storage circuitry 2016 (including communication protocol stack 2010), antenna 2050, and interconnects 2028 may be similar to like-named elements shown and described with respect to FIG. 19.

The CN interface circuitry 2012 may provide connectivity to a core network, for example, a Fifth Generation Core network (5GC) using a 5GC-compatible network interface protocol, such as carrier Ethernet protocols, or some other suitable protocol. Network connectivity may be provided to/from the gNB 2000 via a fiber optic or wireless backhaul. The CN interface circuitry 2012 may include one or more dedicated processors or FPGAs to communicate using one or more of the aforementioned protocols. In some implementations, the CN interface circuitry 2012 may include multiple controllers to provide connectivity to other networks using the same or different protocols.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### Examples

In the following sections, further exemplary embodiments are provided.

Example 1 includes a method comprising: determining that a pre-configured uplink resource (PUR) configuration is valid for at least two cells or at least two base stations of a network; determining that a timing alignment value associated with the PUR configuration is valid; and generating, based on the timing alignment value being valid, a message for an uplink transmission to the network, the uplink transmission using one or more PURs corresponding to the PUR configuration.

Example 2 includes a method comprising: receiving, from a user equipment (UE), a request for a pre-configured uplink resource (PUR) configuration; sending, to the UE, first signaling information indicating the PUR configuration and that the PUR configuration is valid for at least two cells or for at least the first base station and a second base station; and sending, to the second base station, second signaling information indicating that a PUR is configured for the UE, the PUR corresponding to the PUR configuration.

Example 3 includes the method of any preceding example 1 to 2, wherein the PUR configuration is associated with (i) an intra-satellite handover with a same first feeder link or different first feeder links or (ii) an inter-satellite handover with a same second feeder link or different second feeder links.

Example 4 includes the method of any preceding example 1 to 3, further comprising: processing signaling information received from a base station or sending signaling information to the UE, wherein the signaling information indicates the PUR configuration and a list of the at least two cells or a list of the at least two base stations.

Example 5 includes the method of any preceding example 1 to 4, further comprising: processing signaling information received from a base station or sending signaling information to the UE, wherein the signaling information indicates the PUR configuration and a timing advance (TA) type associated with the PUR configuration.

Example 6 includes the method of example 5, wherein the TA type corresponds to at least one of: re-using a first TA of a serving cell, using a same TA for a group of cells, or performing an initial access uplink timing pre-compensation.

Example 7 includes the method of any preceding example 1 to 6, further comprising: processing signaling information received from a base station or sending signaling information to the UE, wherein the signaling information indicates that no restriction applies to acquisition of a timing advance (TA) associated with the PUR configuration.

Example 8 includes the method of any preceding example 1 to 7, further comprising: processing signaling information received from a base station or sending signaling information to the UE, wherein the signaling information indicates the PUR configuration and a validity duration for the one or more PURs.

Example 9 includes the method of any preceding example 1 to 8, further comprising: restarting a time alignment timer (TAT) after an initial access uplink timing pre-compensation is performed.

Example 10 includes the method of example 9, further comprising: processing signaling information received from a base station or sending signaling information to the UE, wherein the signaling information indicates that the initial access uplink timing pre-compensation is to be performed, and wherein the TAT is restarted based on the signaling information.

Example 11 includes the method of any preceding example 1 to 8, further comprising: continuing to run a time alignment timer (TAT) upon coverage changing from a first serving cell to a second serving cell.

Example 12 includes the method of example 11, further comprising: processing signaling information received from a base station, wherein the signaling information indicates that at least one of: a first timing advance (TA) of the first serving cell is to be re-used, or a same TA for a group of cells is to be used, and wherein the TAT is continued to be run based on the signaling information.

Example 13 includes the method of any preceding example 1 to 12, further comprising: determining uplink timing based on signaling information received from a base station or sending signaling information to the UE, wherein the signaling information indicates that no restriction applies to acquisition of a timing advance (TA) associated with the PUR configuration.

Example 14 includes the method of any preceding example 1 to 13, further comprising: determining, based on the PUR configuration, a set of conditions to trigger the using of the one or more PURs for the uplink transmission.

Example 15 includes the method of example 14, wherein the set of conditions includes a condition common to the at least two cells or the at least two base stations.

Example 16 includes the method of example 14, wherein the set of conditions includes a condition specific to only one of the at least two cells or specific to only one of the at least two base stations.

Example 17 includes the method of any preceding example 14 to 16, wherein the set of conditions corresponds to at least one of: (i) a distance threshold for a distance between a user equipment and a satellite or the user equipment and a cell reference location, or (ii) a propagation delay threshold for a signal propagation between the user equipment and the satellite.

Example 18 includes the method of any preceding example 1 to 17, wherein the message is a Message 3 (Msg3) for data sent to a base station of the at least two base stations without sending a prior random access preamble Message 1 (Msg1) or receiving a random access response Message 2 (Msg2), and wherein the method further comprises: processing a Message 4 (Msg4) indicating that the base station successfully received the Msg3 in a contention-based use of the PUR configuration among a plurality of devices or sending to the UE the Msg4.

Example 19 includes the method of example 18, wherein the Msg4 corresponds to a media access control (MAC) control element (CE) that includes a user equipment identifier from the Msg3, a demodulation reference signal (DMRS) index from the Msg3, or one or more radio resource control (RRC) fields in an RRC early release request.

Example 20 includes the method of example 18, wherein the Msg4 corresponds to a media access control (MAC) control element (CE) that indicates a timing advance command (TAC) and that includes a user equipment identifier.

Example 21 includes the method of any preceding example 2 to 20, wherein the second signaling information indicates at least a portion of the PUR configuration.

Example 22 includes a user equipment (UE) or an apparatus comprising: one or more processors; and one or more memory storing instructions that, upon execution by the one or more processors, configure the UE or the apparatus to perform a method described in or related to any of the preceding examples.

Example 23 includes one or more computer-readable media storing instructions that, when executed on a user equipment (UE) or an apparatus, cause the UE or the apparatus to perform operations comprising those of a method described in or related to any of the preceding examples.

Example 24 includes an apparatus comprising means to perform one or more elements of a method described in or related to any of the preceding examples.

Example 25 includes one or more non-transitory computer-readable media comprising instructions to cause an apparatus, upon execution of the instructions by one or more processors of the apparatus, to perform one or more elements of a method described in or related to any of the preceding examples.

Example 26 includes an apparatus comprising logic, modules, or processing circuitry configured to perform one or more elements of a method described in or related to any of the preceding examples.

Example 27 includes an apparatus, a network, a base station, or a system comprising: one or more processors and one or more computer-readable media comprising instructions that, when executed by the one or more processors, cause the one or more processors to perform one or more elements of a method described in or related to any of the preceding examples.

Example 28 includes the method of any one of Examples 1-3, further comprising:
processing signaling information received from a base station, wherein the signaling information indicates that at least one of: a first timing advance (TA) of the first serving cell is to be re-used, or a same TA for a group of cells is to be used;
continuing, based on the signaling information, to run a time alignment timer (TAT) upon coverage changing from a first serving cell to a second serving cell.

Example 29 includes an apparatus comprising:
a receiver;
a transmitter; and
processing circuitry communicatively couple with the receiver and the transmitter and configured to:
   determine that a pre-configured uplink resource (PUR) configuration is valid for at least two cells or at least two base stations of a network;
   determine that a timing alignment value associated with the PUR configuration is valid; and
   generate, based on the timing alignment value being valid, a message for an uplink transmission to the network, the uplink transmission using one or more PURs corresponding to the PUR configuration.

Example 30. The apparatus of Example 29, wherein the processing circuitry is further configured to:
determine, based on the PUR configuration, a set of conditions to trigger the using of the one or more PURs for the uplink transmission.

Example 31. The apparatus of Example 30, wherein the set of conditions includes a condition common to the at least two cells or the at least two base stations.

Example 32. The apparatus of Example 30, wherein the set of conditions includes a condition specific to only one of the at least two cells or specific to only one of the at least two base stations.

Example 33. The apparatus of Example 30, wherein the set of conditions corresponds to at least one of: (i) a distance threshold for a distance between a user equipment and a satellite or the user equipment and a cell reference location, or (ii) a propagation delay threshold for a signal propagation between the user equipment and the satellite.

Example 34. The apparatus of any one of Examples 29-30, wherein the message is a Message 3 (Msg3) for data sent to a base station of the at least two base stations without sending a prior random access preamble Message 1 (Msg1) or receiving a random access response Message 2 (Msg2), and wherein the processing circuitry is further configured to:
process a Message 4 (Msg4) indicating that the base station successfully received the Msg3 in a contention-based use of the PUR configuration among a plurality of devices.

Example 35. The apparatus of Example 34, wherein the Msg4 corresponds to a media access control (MAC) control element (CE) that includes a user equipment identifier from the Msg3, a demodulation reference signal (DMRS) index from the Msg3, or one or more radio resource control (RRC) fields in an RRC early release request or that indicates a timing advance command (TAC) and that includes the user equipment identifier.

Example 36. A method implemented by a first base station, the method comprising:
receiving, from a user equipment (UE), a request for a pre-configured uplink resource (PUR) configuration;
sending, to the UE, first signaling information indicating the PUR configuration and that the PUR configuration is valid for at least two cells or for at least the first base station and a second base station; and
sending, to the second base station, second signaling information indicating that a PUR is configured for the UE, the PUR corresponding to the PUR configuration.

Example 37. The method of Example 36, wherein the second signaling information indicates at least a portion of the PUR configuration.

Any of the above-described examples may be combined with any other example (or combination of examples), unless explicitly stated otherwise. The foregoing description of one or more implementations provides illustration and description but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method comprising:
determining that a pre-configured uplink resource (PUR) configuration is valid for at least two cells or at least two base stations of a network;
determining that a timing alignment value associated with the PUR configuration is valid; and
generating, based on the timing alignment value being valid, a message for an uplink transmission to the network, the uplink transmission using one or more PURs corresponding to the PUR configuration.

2. The method of claim 1, wherein the PUR configuration is associated with (i) an intra-satellite handover with a same first feeder link or different first feeder links or (ii) an inter-satellite handover with a same second feeder link or different second feeder links.

3. The method of any claims 1-2, further comprising:
processing signaling information received from a base station, wherein the signaling information indicates the PUR configuration and a list of the at least two cells or a list of the at least two base stations.

4. The method of any claims 1-2, further comprising:
processing signaling information received from a base station, wherein the signaling information indicates the PUR configuration and a timing advance (TA) type associated with the PUR configuration, wherein the TA type corresponds to at least one of: re-using a first TA of a serving cell, using a same TA for a group of cells, or performing an initial access uplink timing pre-compensation.

5. The method of any claims 1-2, further comprising:
processing signaling information received from a base station, wherein the signaling information indicates that no restriction applies to acquisition of a timing advance (TA) associated with the PUR configuration.

6. The method of any claims 1-2, further comprising:
processing signaling information received from a base station, wherein the signaling information indicates the PUR configuration and a validity duration for the one or more PURs.

7. The method of any claims 1-2, further comprising:
restarting a time alignment timer (TAT) after an initial access uplink timing pre-compensation is performed; and
processing signaling information received from a base station, wherein the signaling information indicates that the initial access uplink timing pre-compensation is to be performed, and wherein the TAT is restarted based on the signaling information.

8. The method of any claims 1-2, further comprising:
processing signaling information received from a base station, wherein the signaling information indicates that at least one of: a first timing advance (TA) of the first serving cell is to be re-used, or a same TA for a group of cells is to be used; and
continuing, based on the signaling information, to run a time alignment timer (TAT) upon coverage changing from a first serving cell to a second serving cell.

9. An apparatus comprising:
a receiver;
a transmitter; and
processing circuitry communicatively coupled with the receiver and the transmitter and configured to:
determine that a pre-configured uplink resource (PUR) configuration is valid for at least two cells or at least two base stations of a network;
determine that a timing alignment value associated with the PUR configuration is valid; and
generate, based on the timing alignment value being valid, a message for an uplink transmission to the network, the uplink transmission using one or more PURs corresponding to the PUR configuration.

10. The apparatus of claim 9, wherein the processing circuitry is further configured to:
determine, based on the PUR configuration, a set of conditions to trigger the using of the one or more PURs for the uplink transmission.

11. The apparatus of claim 10, wherein the set of conditions includes at least one of: (i) a condition common to the at least two cells or the at least two base stations, or (ii) a condition specific to only one of the at least two cells or specific to only one of the at least two base stations.

12. The apparatus of claim 10, wherein the set of conditions corresponds to at least one of: (i) a distance threshold for a distance between a user equipment and a satellite or the user equipment and a cell reference location, or (ii) a propagation delay threshold for a signal propagation between the user equipment and the satellite.

13. The apparatus of any claims 9-12, wherein the message is Message 4 (Msg4), wherein the Msg4 corresponds to a media access control (MAC) control element (CE) that includes a user equipment identifier from a Message 3 (Msg3), a demodulation reference signal (DMRS) index from the Msg3, or one or more radio resource control (RRC) fields in an RRC early data request or the Msg4 indicates a timing advance command (TAC) and includes the user equipment identifier.

14. A method implemented by a first base station, the method comprising:
receiving, from a user equipment (UE), a request for a pre-configured uplink resource (PUR) configuration;
sending, to the UE, first signaling information indicating the PUR configuration and that the PUR configuration is valid for at least two cells or for at least the first base station and a second base station; and
sending, to the second base station, second signaling information indicating that a PUR is configured for the UE, the PUR corresponding to the PUR configuration.

15. The method of claim 14, wherein the second signaling information indicates at least a portion of the PUR configuration.
